# EUROPEAN PATENT SPECIFICATION

(11) **EP 0 785 855 B1**
(45) Date of publication and mention of the grant of the patent: **10.06.1998**
(21) Application number: 95936319.3
(22) Date of filing: 02.10.1995
(51) Int. Cl.: B29C 44/04, B29C 45/17

(54) **MOLDING PROCESS**
GIESSVERFAHREN
PROCEDE DE MOULAGE

(30) Priority: 03.10.1994 EP 94202857
(43) Date of publication of application: 30.07.1997
(73) Proprietor: E.I. DU PONT DE NEMOURS AND COMPANY, Wilmington Delaware 19898 (US)
(72) Inventor: BENDER, Klaus, D-70190 Stuttgart (DE); LEBOEUF, Philippe, F-75012 Paris (FR); TOPULOS, Georgios, CH-1209 Geneva (CH)
(74) Representative: Freiherr von Wittgenstein, Arved, Dr.
(86) International application number: US9513121
(87) International publication number: WO9610476

(56) References cited:
- US-A- 4 092 385
- PATENT ABSTRACTS OF JAPAN vol. 008 no. 240 (M-336) ,6 November 1984 & JP,A,59 120429 (ENJINIARINGU PLASTICS KK) 12 July 1984,

## Description

### Background of the Invention

The present invention relates to a process for making an injection molded article having a substantially smooth outer surface and a foamed core, as well as to a molded article so produced.

### Brief Description of the Prior Art

In the case of conventional low pressure injection molding systems, foaming occurs virtually instantaneously as the melt enters the cavity and melt pressure decays to atmospheric pressure. As a result, however, articles so molded tend not to have smooth outer surfaces.

Various processes for making an injection molded article with a substantially smooth outer surface and a foamed core are known in the art. One such process is referred to as a "high pressure molding process". This process operates by maintaining a homogeous melt phase of a thermoplastic polymer containing dissolved gas within a molding cavity after injection of the polymer. Foaming of the polymer melt is induced by the controlled decay of melt pressure to levels below the solution pressure of the dissolved gases. The control over melt pressure decay rates is achieved by mechanical movement of a mold face, a retracting pin (in an integral skin molding system) or a control over the decay rate of air pressure within the cavity (in a counter pressure foam molding system); c.f. "The Injection Moulding of Cellular Thermoplastics", 1985, a brochure available from Schering Industrial Chemicals, Cambridge, England.

These known processes have certain disadvantages. A molding process which makes use of integral skin molding can only be carried out with equipment of relatively simple design. The mechanical movement of the mold face necessitates that the mold have a simple shape, and thus, such processes are only suitable for preparing articles of simple shape.

A process that makes use of counter pressure foam molding has the disadvantage that permits a maximum reduction in density of only about 8% over a non-foamed article. For certain end uses, it is desirable to have very low density, i.e. highly foamed articles.

Various processes are known in the art for producing foamed articles, however,
JP-A-59120429 does not suggest to return any material to the extruder and
US-A-4092385 does not suggest to introduce a gas after injection of the melt.
Furthermore, the melt in the US document is not forced back into the extruder barrel under the pressure of an introduced fluid.

Accordingly, it is an object of the present invention to provide a process for making an injection molded article having a substantially smooth outer surface a foamed core which is capable of forming articles having shapes more complex than those possible using integral skin molding technology and having densities lower than those possible using counter pressure foam molding technology (e.g. a reduction in density of 10% and greater).

The object of the present invention is obtained through a process comprising the steps of
(a) injecting a melt of a thermoplastic polymer containing a foaming agent through an injection unit into a mold and maintaining said melt under a holding pressure to form an article having a substantially smooth outer surface;
(b) releasing the holding pressure of the melt and introducing a gas under pressure into the mold to create a hollow space in the melt by returning a portion of the melt from the mold back to the injection unit;
(c) closing the injection unit to prevent melt from flowing back into the mold; and
(d) releasing the pressure of the introduced gas to allow foaming of the melt.
These, and other features of the invention shall be described in greater detail below.

### Brief Description of the Drawings

Figure 1 shows a molding apparatus suitable for use in the present invention, consisting of a mold 1, an injection molding machine 3 having a injection unit 2, a gas injection needle 4 and a pressurized gas source 5 for the gas injection needle 4. Thermoplastic melt is indicated as 6.

Figure 2 depicts the apparatus of Figure 1 after pressurized gas is introduced into mold 1 to force a portion of the melt back into injection unit 2 to create hollow space 7.

Figure 3 indicates a pressure release of the gas which allows foaming of the melt.

Figure 4 shows removal of the molded article after sufficient cooling.

### Detailed Description of the Invention

As used herein, a "substantially smooth" outer surface of the foamed article of the present invention means an outer surface (skin) that is substantially free from pits, surface irregularities, roughness and other such surface defects, and which approximates the smoothness of a non-foamed article.

The present invention can be practiced with molding devices and equipment that are currently commercially available. Such equipment includes a standard injection molding machine with a shut-off nozzle, and a gas injection unit (c.f. aforementioned brochure from Schering). Gas is introduced into the mold using any suitable gas injection needle.

A detailed description of a suitable embodiment for carrying out the process of the present invention shall now be given.

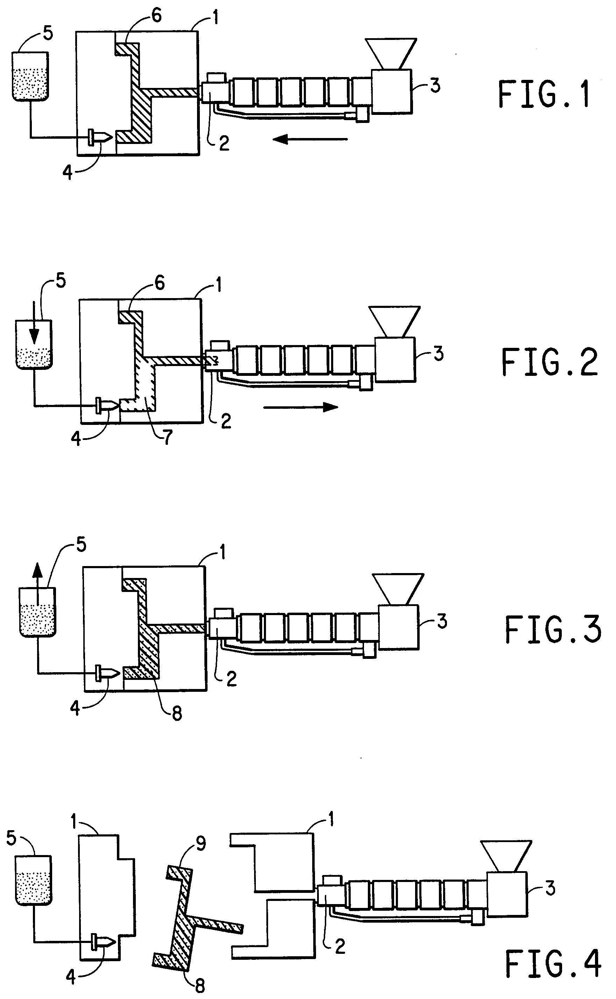

As shown in Figure 1, a melt of a thermoplastic containing a foaming agent is injected into mold 1 through injection unit 2 located on molding machine 3. Injection unit 2 will contain a back flow valve which prevents flow of the melt back into the injection unit (more precisely, the barrel of the injection unit) while there is pressure in the mold cavity.

The mold is substantially entirely filled with the thermoplastic melt. The melt can thereby be kept under a holding pressure which prevents foaming and allows formation of a substantially smooth outer surface (skin).

The mold will typically be held at a pressure ranging from 200 to 1000 bar.

As indicated in Figure 2, the holding pressure in mold 1 is then released, and a gas from source 5 is introduced through needle 4 into the mold to create a hollow space 7 in the melt which forces a portion of the thermoplastic melt out of the mold back into injection unit 2. The gas used is preferably nitrogen.

The gas is preferably introduced into the mold at a pressure typically from 50 to 400 bar.

After a portion of the melt is forced out of the mold back into the injection unit, an actuator causes a valve to close to prevent further melt from flowing back into the injection unit. The actuator may be any suitable device which senses flow of thermoplastic out of the mold and into the injection unit. A suitable such actuator is a screw, which, when displaced by the thermoplastic a set distance, causes the aforementioned valve to close.

Preferably, from 10 to 70% by weight of thermoplastic that is originally injected into the mold is removed from the mold.

As indicated in Figure 3, the pressure of the introduced gas is then released, thereby allowing foaming of the melt. As this occurs, the hollow space is filled with foamed melt, thereby yielding an injection molded article having a substantially smooth outer surface and a foamed core 8.

Subsequently, as indicated in Figure 4, the molded article having a foamed core 8 and substantially smooth outer surface 9 is cooled sufficiently and removed from the mold.

The process of the present invention may be carried out on many types of known thermoplastics, including block copolyether esters (e.g. HYTREL®, available from the DuPont Company), block copolyether amides, polyurethanes, copolyetherimide esters, polyolefins and polyolefin copolymers, styrene alloys and copolymers, polyvinyl chloride, polyesters, polyamides and polycarbonates.

Suitable foaming agents are those known in the art, and include gases and chemical foaming agents such as sodium bicarbonate, diazodicarbonamide and sulfonyl hydrazides.

The chemical foaming agent will typically comprise up to 5% by weight of the thermoplastic.

### Practical Example - Injection Molding of an Automobile Door Handle

A thermoplastic copolyether ester (HYTREL® 4056) containing 2% by weight of a foaming agent (HYDROCEROL BIH 70 available from Boehringer Ingelheim KG) is molded in a door handle mold on an Engel 145t injection molding machine having an HC 500 screw type, and being equipped with an Engel gas injection unit and an Engel EC 88 control unit.

The melt is maintained at 180°C and the injection unit is maintained at the following temperature profile:

| **BARREL** | | | | |
|---|---|---|---|---|
| | Nozzle | Front | Center | Rear |
| Temp (°C) | 150 | 180 | 175 | 155 |

The melt is injected at a rate of 50 mm/sec into the mold for a period of 1.3 sec. and maintained at a holding pressure of 500 bar for 1 sec with a pad of 5.7 mm; subsequently the holding pressure is released.

Nitrogen gas is then introduced into the mold at a pressure of 200 bar and is maintained for 20 sec such that approximately 50% by weight of the melt is forced out of the mold and back into the injection unit.

The pressure of the nitrogen gas is released to permit foaming for a period of 35 sec while at the same time the molded door handle so produced cools and can be ejected from the mold cavity.

## Claims

1. A process for injection molding an article having a substantially smooth outer surface and a foamed core comprising the steps of
(a) injecting a melt of a thermoplastic polymer containing a foaming agent through an injection unit into a mold and maintaining said melt under a holding pressure to form an article having a substantially smooth outer surface;
(b) releasing the holding pressure of the melt and introducing a gas under pressure into the mold to create a hollow space in the melt by returning a portion of the melt from the mold to the injection unit;
(c) closing the injection unit to prevent melt from flowing back into the mold; and
(d) releasing the pressure of the introduced gas to allow foaming of the melt.

2. A process according to claim 1 wherein from 10 to 70 % by weight of melt is returned to the injection unit in step (b).

3. A process according to claim 1 wherein the gas is introduced into the mold at a pressure from 50 to 400 bar.

4. A process according to claim 1 wherein the gas is nitrogen.

5. A process according to claim 1 wherein the thermoplastic polymer is selected from the group consisting of block copolyether esters, block copolyether amides, polyurethanes, copolyetherimide esters, polyolefins and polyolefin copolymers, styrene alloys and copolymers, polyvinyl chloride, polyesters, polyamides and polycarbonates.

6. A process according to claim 1 wherein the foaming agent is a gas or a chemical foaming agent.

7. A process according to claim 6 wherein the melt contains up to 5% by weight chemical foaming agent.

## Patentansprüche

1. Verfahren zum Spritzgießen eines Gegenstandes mit einer im wesentlichen glatten äußeren Oberfläche und einem geschäumten Kern, umfassend die Stufen
(a) Einspritzen einer Schmelze eines thermoplastischen Polymeren, welche ein Schäumungsmittel enthält, durch eine Einspritzeinheit in eine Form und Halten der Schmelze unter einem Haltedruck, um einen Gegenstand mit einer im wesentlichen glatten äußeren Oberfläche zu erzeugen;
(b) Entspannen des Haltedrucks der Schmelze und Einführen eines unter Druck stehenden Gases in die Form, um einen Hohlraum in der Schmelze zu erzeugen, indem ein Teil der Schmelze aus der Form in die Einspritzeinheit zurückgeführt wird;
(c) Schließen der Einspritzeinheit, um ein Zurück-fließen der Schmelze in die Form zu verhindern; und
(d) Entspannen des Drucks des eingeführten Gases, um das Schäumen der Schmelze zu gestatten.

2. Verfahren nach Anspruch 1, bei welchem 10 bis 70 Gew.-% der Schmelze in Stufe (b) in die Einspritzeinheit zurückgeführt wird.

3. Verfahren nach Anspruch 1, bei welchem das Gas unter einem Druck von 50 bis 400 bar in die Form eingeführt wird.

4. Verfahren nach Anspruch 1, bei welchem das Gas Stickstoff ist.

5. Verfahren nach Anspruch 1, bei welchem das thermoplastische Polymere ausgewählt ist aus der Gruppe bestehend aus Blockcopolyetherestern, Blockcopolyetheramiden, Polyurethanen, Copolyetherimidestern, Polyolefinen und Polyolefincopolymeren, Styrollegierungen und -copolymeren, Polyvinylchlorid, Polyestern, Polyamiden und Polycarbonaten.

6. Verfahren nach Anspruch 1, bei welchem das Schäumungsmittel ein Gas oder ein chemisches Schäumungsmittel ist.

7. Verfahren nach Anspruch 6, bei welchem die Schmelze bis zu 5 Gew.-% chemisches Schäumungsmittel enthält.

## Revendications

1. Procédé pour mouler par injection un article ayant une surface extérieure substantiellement lisse et un coeur expansé, comprenant les étapes consistant à
(a) injecter une masse fondue d'un polymère thermoplastique contenant un agent d'expansion, au travers d'un appareil d'injection, dans un moule, et maintenir ladite masse fondue sous une pression de maintien pour former un article ayant une surface extérieure substantiellement lisse;
(b) relâcher la pression de maintien de la masse fondue et introduire un gaz sous pression dans le moule pour créer un espace creux dans la masse fondue en renvoyant une partie de la masse fondue du moule à l'appareil d'injection;
(c) fermer l'appareil d'injection pour empêcher la masse fondue de refluer dans le moule; et
(d) relâcher la pression du gaz introduit pour permettre l'expansion de la masse fondue.

2. Procédé selon la revendication 1, dans lequel de 10 à 70% en poids de la masse fondue sont renvoyés à l'appareil d'injection dans l'étape (b).

3. Procédé selon la revendication 1, dans lequel le gaz est introduit dans le moule à une pression de 50 à 400 bars.

4. Procédé selon la revendication 1, dans lequel le gaz est de l'azote.

5. Procédé selon la revendication 1, dans lequel le polymère thermoplastique est choisi dans le groupe constitué par les esters de copolyéther séquencé, les ami des de copolyéther séquencé, les polyuréthannes, les esters de copolyétherimide, les polyoléfines et les copolymères de polyoléfine, les alliages et copolymères de styrène, le chlorure de polyvinyle, les polyesters, les polyamides et les polycarbonates.

6. Procédé selon la revendication 1, dans lequel l'agent d'expansion est un gaz ou un agent d'expansion chimique.

7. Procédé selon la revendication 6, dans lequel la masse fondue contient jusqu'à 5% en poids d'agent d'expansion chimique.
